(19) Europäisches Patentamt
European Patent Office
Office européen des brevets

(11) **EP 4 668 219 A1**

(12) **EUROPEAN PATENT APPLICATION**
published in accordance with Art. 153(4) EPC

(43) Date of publication:
**24.12.2025 Bulletin 2025/52**

(21) Application number: **24756257.2**

(22) Date of filing: **07.02.2024**

(51) International Patent Classification (IPC):
**G06T 19/20** (2011.01)

(52) Cooperative Patent Classification (CPC):
**G06T 7/70; G06T 19/00; G06T 19/20**

(86) International application number:
**PCT/CN2024/076736**

(87) International publication number:
**WO 2024/169884 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310180644**

(71) Applicant: **Beijing Zitiao Network Technology Co., Ltd.
Beijing 100190 (CN)**

(72) Inventors:
• ZHU, Xin
  **Beijing 100028 (CN)**
• LUO, Yuxuan
  **Beijing 100028 (CN)**

(74) Representative: **Grünecker Patent- und
Rechtsanwälte
PartG mbB
Leopoldstraße 4
80802 München (DE)**

(54) **IMAGE PROCESSING METHOD AND APPARATUS, ELECTRONIC DEVICE, AND STORAGE MEDIUM**

(57) This application provides a method, an apparatus, an electronic device, and a storage medium for image processing, comprising: performing a key point prediction on an accessory carrier image, and determining a six-degree-of-freedom pose value based on the first key point obtained by prediction; adjusting the pose of the virtual accessory carrier model based thereon, and obtaining first edge points of the adjusted model; calculating an adjustment parameter based on the first edge points and second key points, and obtaining a target virtual accessory carrier model based on the adjustment parameter; the virtual accessory carrier model being mounted with a virtual accessory model, and obtaining a corresponding accessory image; and rendering the accessory image to the accessory carrier image. According to the present application, the pose adjustment and model optimization are performed on the virtual accessory carrier model by determining the key points of the accessory carrier, the six-degree-of-freedom pose value and the adjustment parameter, the real wearing effect of the accessory at a specific angle is simulated by obtaining the image of the virtual accessory model, finally the accessory is more attached to the carrier, and the rendering effect of the carrier wearing accessory is improved during motion.

FIG. 1

## Description

The present application claims the benefit of Chinese Patent Application No. 202310180644.2, filed on February 17, 2023, entitled "METHOD, APPARATUS, ELECTRONIC DEVICE, AND STORAGE MEDIUM FOR IMAGE PROCESSING", the entire content of which are incorporated herein by reference.

## FIELD

The present application relates to the field of image processing technologies, and in particular, to a method, an apparatus, an electronic device, and a storage medium for image processing.

## BACKGROUND

With the rapid development of science and technology, people have higher requirements for material level and user experience, and if the user can perform virtual try-on before purchasing accessories (rings, glasses, earrings, watches, etc.) and experience various try-on effects, the user's real experience and the user's interest in purchasing will be increased.

However, in some current applications or webpages capable of achieving AR (Augmented Reality) wrist accessory try-on capability, the fitting degree, the followability, and the stability of the virtual accessory achieved by the application or webpage is poor, and thus the user experience during try-on degrades massively.

## SUMMARY

In view of the above, the present application provides a method, an apparatus, an electronic device, and a storage medium for image processing.

Based on the above purposes, the present disclosure provides an image processing method, including:

obtaining an accessory carrier image based on an input image, and performing a key point prediction on the accessory carrier image to obtain first key points and second key points, the second key points being located at an edge of an accessory carrier in the accessory carrier image;

determining a six-degree-of-freedom pose value based on the first key points, predetermined three-dimensional point data, and a device parameter;

adjusting a pose of a virtual accessory carrier model based on the six-degree-of-freedom pose value, and obtaining first edge points of the adjusted virtual accessory carrier model;

determining an adjustment parameter(s) of the virtual accessory carrier model based on the first edge points and the second key points, obtaining a target virtual accessory carrier model based on the adjustment parameter(s), the target virtual accessory carrier model being mounted with a virtual accessory model, and obtaining an accessory image of the virtual accessory model based on the device parameter;

rendering the accessory image to the input image.

In some embodiments, obtaining the first edge points of the adjusted virtual accessory carrier model comprises:

obtaining a three-dimensional edge point of the adjusted virtual accessory carrier model;

projecting the three-dimensional edge point to obtain the first edge points.

In some embodiments, the second key points comprise two groups of second key points,
calculating the adjustment parameter(s) of the virtual accessory carrier model based on the first edge points and the second key points comprises:

obtaining at least two first edge lines by fitting the two groups of second key points, respectively, each of the first edge points corresponding to one of the first edge lines;

determining points corresponding to the first edge points on the corresponding first edge lines as second edge points;

the first edge points being in a one-to-one correspondence with the second edge points;

determining the adjustment parameter(s) of the virtual accessory carrier model based on the first edge points and the corresponding second edge points.

In some embodiments, the first edge points comprise at least one group of first edge points,
determining the points corresponding to the first edge points on the corresponding first edge lines as the second edge points comprises:

determining at least one second edge line based on the first edge points in a same group;
determining second edge points corresponding to the first edge points on the corresponding first edge lines based on intersection points of the at least one second edge line with the at least two first edge lines.

In some embodiments, the adjustment parameter(s) comprises a deformation parameter and a translation parameter of the virtual accessory carrier model, wherein the deformation parameter is configured to adjust a shape size of the virtual accessory carrier model, and the translation parameter is for adjusting at least part of components of the six-degree-of-freedom pose value,
obtaining the target virtual accessory carrier model based on the adjustment parameter(s) comprises:
obtaining the target virtual accessory carrier model by performing a corresponding deformation on the adjusted virtual accessory carrier model based on the deformation parameter, and/or adjusting the at least part of components of the six-degree-of-freedom pose value of the virtual accessory carrier model based on the translation parameter.

In some embodiments, the virtual accessory carrier model is provided with a deformation parameter threshold, performing the corresponding deformation on the adjusted virtual accessory carrier model based on the deformation parameter comprises:

in response to the deformation parameter exceeding the deformation parameter threshold, taking the deformation parameter threshold as a new deformation parameter;
performing the corresponding deformation on the adjusted virtual accessory carrier model based on the new deformation parameter.

In some embodiments, obtaining the accessory carrier image based on the input image comprises:

performing an accessory carrier recognition on the input image;
in response to recognizing the accessory carrier, cropping the input image based on a position of the accessory carrier, and performing a normalization processing on the cropped input image to obtain the accessory carrier image.

In some embodiments, performing the normalization processing on the cropped input image to obtain the accessory carrier image comprises:
in response to the accessory carrier being a mirror carrier of a predetermined standard carrier, flipping the cropped input image to obtain the accessory carrier image.

In some embodiments, performing the accessory carrier recognition on the input image comprises:

determining whether a confidence level of the input image is higher than a threshold;
in response to the confidence level of the input image being higher than the threshold, determining that the accessory carrier is recognized in the input image, and cropping the input image based on a bounding box obtained by performing the accessory carrier recognition on the input image.

In some embodiments, obtaining the accessory carrier image based on the input image comprises:

in response to obtaining a request operation for adding a virtual accessory, determining an accessory carrier corresponding to the virtual accessory, and generating prompt information for the accessory carrier to enable the accessory carrier to move and/or adjust a pose based on the prompt information;
obtaining the input image through an image acquisition device, and recognizing an image of an accessory carrier in the input image to generate the accessory carrier image.

In some embodiments, when the accessory carrier image is an image sequence,
generating the first key points and the second key points comprises:
performing a smoothing processing on the first key points and/or the second key points based on optical flow information and/or timing information of the accessory carrier image.

In some embodiments, determining the six-degree-of-freedom pose value based on the first key points, the predetermined three-dimensional point data, and the device parameter comprises:

projecting the three-dimensional point data based on the device parameter to obtain a projection result;
calculating an error value between the projection result and the first key points;
adjusting the three-dimensional point data, repeatedly calculating the error value, and calculating the six-degree-of-freedom pose value based on the three-dimensional point data corresponding to the minimum error value.

In some embodiments, after calculating the six-degree-of-freedom pose value, the method further comprises: performing a smoothing processing on a rotation value in the six-degree-of-freedom pose value by using an interpolation algorithm, and/or performing a smoothing processing on a translation value in the six-degree-of-freedom pose value by using a time sequence weighting algorithm.

Based on the same concept, the present application further provides an image processing apparatus, including:

an obtaining module, configured to obtain an accessory carrier image based on an input image, and perform a key point prediction on the accessory carrier image to obtain first key points and second key points, the second key points being located at an edge of the accessory carrier image; a first calculating module configured to determine a six-degree-of-freedom pose value based on the first key points, predetermined three-dimensional point data, and a device parameter;

an adjusting module, configured to adjust a pose of a virtual accessory carrier model based on the six-degree-of-freedom pose value, and obtain first edge points of the adjusted virtual accessory carrier model;

a second calculating module, configured to determine an adjustment parameter(s) of the virtual accessory carrier model based on the first edge points and the second key points, obtain a target virtual accessory carrier model based on the adjustment parameter(s), the target virtual accessory carrier model being mounted with a virtual accessory model, and obtain an accessory image of the virtual accessory model based on the device parameter;

a rendering module, configured to render the accessory image to the input image.

Based on a same concept, the present disclosure further provides a non-transitory computer-readable storage medium storing computer instructions, wherein the computer instructions are configured to cause a computer to implement any of the above-described method.

Based on the same concept, the present application further provides an electronic device, comprising a memory, a processor, and a computer program stored on the memory and executable on the processor, wherein when executing the program, the processor implements any of the above-described method.

As can be seen from the above, the present application provides a method, an apparatus, an electronic device, and a storage medium for image processing, comprising: obtaining an accessory carrier image based on an input image, and performing a key point prediction on the accessory carrier image to obtain first key points and second key points, the second key points being located at an edge of an accessory carrier in the accessory carrier image; determining a six-degree-of-freedom pose value based on the first key points, predetermined three-dimensional point data, and a device parameter; adjusting a pose of a virtual accessory carrier model based on the six-degree-of-freedom pose value, and obtaining first edge points of the adjusted virtual accessory carrier model; determining an adjustment parameter(s) of the virtual accessory carrier model based on the first edge points and the second key points, obtaining a target virtual accessory carrier model based on the adjustment parameter(s), the target virtual accessory carrier model being mounted with a virtual accessory model, and obtaining an accessory image of the virtual accessory model based on the device parameter; and rendering the accessory image to the input image. According to the present application, the key points of the accessory carrier and the six-degree-of-freedom pose value are determined, the pose of the virtual accessory carrier model is adjusted through the six-degree-of-freedom pose value. The adjustment parameter of the virtual accessory carrier model is calculated based on the edge points obtained by projection in the adjusted virtual accessory carrier model and the obtained key points. The virtual accessory carrier model is adjusted based on the adjustment parameter to obtain the target virtual accessory carrier model, so that the real pose of the accessory carrier is simulated. Furthermore, the image of the virtual accessory model is obtained based on the image acquisition device set according to the device parameter, the real wearing effect of the accessory at a specific angle is simulated, the fitness of the virtual accessory with the virtual accessory carrier is further improved based on the above-mentioned adjustment of the parameters in the virtual accessory carrier model. The problem of model penetration caused by the virtual accessory carrier model and the virtual accessory model having an overlapping area in a three-dimensional space can be effectively avoided, the fitting degree and stability under the condition of fast movement can be improved, and finally the user experience during try-on is effectively improved.

**BRIEF DESCRIPTION OF DRAWINGS**

In order to more clearly describe the technical solutions in the embodiments of the present application or related technologies, the accompanying drawings that need to be used in the description of the embodiments or related technologies are briefly described below, and obviously, the drawings in the following description are merely embodiments of the present application, and for those of ordinary skill in the art, other drawings may be obtained based on these drawings without creative work.

FIG. 1 is a schematic flowchart of an image processing method according to an embodiment of the present application;

FIG. 2 is a schematic diagram of first edge points of a virtual accessory carrier model according to an embodiment of the present application;

FIG. 3 is a schematic diagram of edge points according to an embodiment of the present application;

FIG. 4 is a schematic structural diagram of an image processing apparatus according to an embodiment of the present application;

FIG. 5 is a schematic structural diagram of an electronic device according to an embodiment of the present application.

## DETAILED DESCRIPTION

In order to make the objectives, technical solutions and advantages of the present specification clearer, the present specification is further described in detail below with reference to the accompanying drawings.

It can be understood that, before using the technical solutions disclosed in the embodiments of the present application, the types of personal information related to the application, the usage scope, the usage scenario, and the like should be notified to the user in an appropriate manner according to the relevant laws and regulations, and the authorization of the user is obtained.

For example, in response to receiving an active request from a user, prompt information is sent to the user to explicitly prompt the user that the requested operation will need to acquire and use the personal information of the user. Therefore, the user can autonomously select whether to provide personal information to software or hardware executing the operation of the technical solution of the present application according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "disagree" to provide personal information to the electronic device.

It should be understood that the foregoing process for notification and obtaining the user authorization is merely illustrative, and thus does not constitute a limitation on the implementations of the present application, and other manners of meeting related laws and regulations may also be applied to implementations of the present application.

It should be understood that the data involved in the technical solution (including but not limited to the data itself, the acquisition or use of the data) should follow the requirements of the corresponding laws and regulations and related regulations.

In order to make the objectives, technical solutions and advantages of the present specification clearer, the present specification is further described in detail below with reference to the accompanying drawings.

It should be noted that, unless otherwise defined, technical terms or scientific terms used in the embodiments of the present application should be of ordinary meanings understood by those skilled in the art to which the present application belongs. The terms "first", "second" and similar terms used in the embodiments of the present application do not represent any order, quantity, or importance, but are merely used to distinguish different components. A word "comprise" or "comprising" or the like means that an element, object, or method step that appears in front of the word encompasses elements, objects, or method steps that appear behind the word and equivalents thereof, without excluding other elements, objects, or method steps. Similar terms such as "connect" or "connected" are not limited to physical or mechanical connections, but may include electrical connections, whether direct or indirect. "Upper", "lower", "left", "right" and the like are only used to represent relative position relationships, and when the absolute position of the object to be described changes, the relative position relationship may also change accordingly.

As described in the background section, with rapid development of science and technology, virtual reality technology and augmented reality technology are getting more and more widely used. Augmented Reality (AR), which is a new technology integrating real world information and virtual world information "seamless", is to integrate real world information and physical information (information such as visual, sound, taste, and touch) that would otherwise be difficult to experience within a certain time space range of the real world, simulate the simulation and then superimpose the virtual information through various scientific techniques, apply the virtual information to the real world and be perceived by the human senses, thereby achieving an overrunning realistic sensory experience, and superimposing the real environment and the virtual object in real time to the same picture or space so that they exist simultaneously. Current AR technology can be widely used in various fields.

With the development of Internet technologies, more and more commodities are sold through a network, including accessories, clothes and the like. These articles usually need to be worn or tried on, so that the consumer can find out whether the article is suitable for himself/herself. However, network sales generally only show an item picture, and cannot provide a real wearing and try-on service, and thus an AR virtual try-on service appears in this field. Some applications and web services that enable AR accessory try-on capabilities have emerged on the market currently, which can simulate virtual accessory wear in real time. However, due to the high degree of freedom of some parts of the human body (for example, the thickness of the wrist of each person is different), it is difficult for the existing technology to meet the requirements of AR try-on on the reality experience, such as problems like poor fitting degree, model penetration, and not following with wrist movement.

With reference to the foregoing actual situation, embodiments of the present application provide an image processing method. According to the present application, the key points of the accessory carrier and the six-degree-of-freedom pose value are determined, the pose of the virtual accessory carrier model is adjusted through the six-degree-of-freedom pose value. The adjustment parameter of the virtual accessory carrier model is calculated based on the edge points obtained by projection in the adjusted virtual accessory carrier model and the obtained key points. The virtual accessory carrier model is adjusted based on the adjustment parameter to obtain the target virtual accessory carrier model, so that the real pose of the accessory carrier is simulated. Furthermore, the image of the virtual accessory model is obtained based on the image acquisition device set according to the device parameter, the real wearing effect of the accessory at a specific angle is simulated, the fitness of the virtual accessory with the virtual accessory carrier is further improved based on the above-mentioned adjustment of the parameters in the virtual accessory carrier model. The problem of model penetration caused by the virtual accessory carrier model and the virtual accessory model having an overlapping area in a three-dimensional space can be effectively avoided, the fitting degree and stability under the condition of fast movement can be improved, and finally the user experience during try-on is effectively improved.

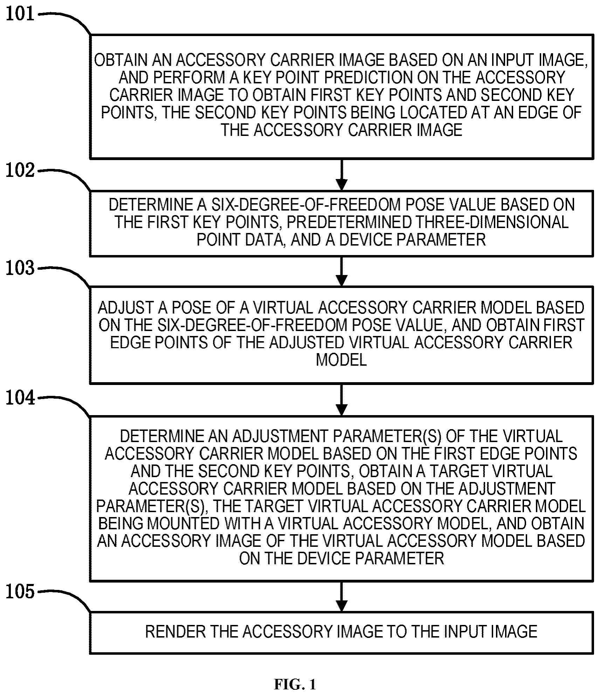

FIG. 1 is a schematic flowchart of an image processing method according to the present application. The method specifically includes:

Step 101: obtain an accessory carrier image based on an input image, and perform a key point prediction on the accessory carrier image to obtain first key points and second key points, the second key points being located at an edge of the accessory carrier image.

In some embodiments, the accessory carrier is a carrier for carrying an accessory, wherein the accessory may be a ring, an earring, a necklace, a bracelet, a watch, or the like, or a breastpin, a waistband disposed on clothing, or the like, and the corresponding carrier is a finger, an ear, a neck, a wrist, a chest and chest clothing, a waist and a waist clothing, and the like. In a specific embodiment, the corresponding accessory carrier may be determined according to the accessory selected by the user, for example, if the accessory selected by the user is a watch, the corresponding accessory carrier is the wrist. The method for acquiring the image of the accessory carrier may be directly inputted by the user, for example, the user directly shoots the corresponding carrier through the camera, or the user directly inputs the image file containing the corresponding carrier; or may be found in the network database through the network. At the same time, the accessory carrier image may be a single-frame image, for example, a picture or the like, or may be a multi-frame image sequence, for example, a video, and the specific image representation form may be flexibly adjusted according to a specific application scenario. In some embodiments, the user generally cannot directly provide an image containing only the accessory carrier, which can generally provide images or videos with more background or other limbs. For example, a user cannot directly provide a wrist only image, which generally provides a captured wrist video or image containing more background. Further, it is common to first obtain an input image input by a user, and first perform feature recognition and other processing on the input images to obtain an accessory carrier image, so that in the obtained accessory carrier image, other content than the accessory carrier is relatively small in the image. Of course, in some embodiments, the user may also directly provide an image containing only the accessory carrier (or an image in the image other than the accessory carrier other than the accessory carrier) as the input image, or directly input the input image of the user as the accessory carrier image. The specific implementation manner may be specifically adjusted according to a specific application scenario. In addition, for the input image itself, it may be a single-frame image, for example, a picture, or may be a multi-frame image, such as a video.

Then, key point prediction is performed on the obtained accessory carrier image, where the key point is used for accurately recognizing a limb or an entity, for example, wrist recognition. At first, obtaining a wrist key point feature (these key points are generally preset, or determined according to a predetermined model), and then controlling the virtual object to correspondingly change according to changes such as translation, rotation and the like of the key point feature, so as to achieve the purpose of AR. Likewise, other part recognition such as face recognition is similar to the wrist recognition. The model for performing the key point prediction herein may be a recognition model based on a wrist, a face, and a leg of the deep learning network model. For example, in an example scenario in which the watch is worn, since the watch is generally worn on the wrist, the accessory carrier may be a wrist, the object predicted by the key point may be a wrist, and different numbers of key points of the wrist may be predicted respectively according to different prediction models, such as 4,20, 36,48, etc. Of course, the number of predicted key points may be flexibly set during model training. Finally, a corresponding key point result is obtained, where the key point result may be a two-dimensional (2D) point coordinate result and the like. For example, key point prediction is performed on the wrist, 48 key point results may be finally obtained, and the pose of the accessory carrier in the current accessory carrier image may be reflected by using these key point results. For example, for images with a wrist being in different states such as flat state, vertical state, and rotated with a certain angle, corresponding key point results necessarily have corresponding differences. In addition, it should be noted that the key point result includes a first key point(s) and a second key point(s), where the first key points may be distributed at any position of the accessory carrier in the accessory carrier image, and are configured to solve the six-degree-of-freedom pose value in a subsequent step, where the second key points are located at an edge of the accessory carrier in the accessory carrier image, and are configured to determine an adjustment parameter(s) of the virtual accessory carrier model. In some examples, a position of the first key point and a position of the second key point in the accessory carrier image are different. Therefore, in the foregoing 48 key point results, as an example implementation, there may be 42 first key points, there may be 6 second key points, wherein the 6 second key points are located at an edge of the accessory carrier in the accessory carrier image, and are configured to adjust the shape size of the virtual accessory carrier model subsequently, and the remaining 42 first key points are used to subsequently solve the six-degree-of-freedom pose value.

Step 102: determine a six-degree-of-freedom pose value based on the first key points, predetermined three-dimensional point data, and a device parameter.

In some embodiments, the six-degree-of-freedom pose value is a 6D pose value, and 6D refers to 6 degrees of freedom, representing a translation with 3 degrees of freedom, and a spatial rotation with 3 degrees of freedom. A combination of these 6 degrees of freedom is referred to as a pose. The pose is a relative concept, and refers to a position and a gesture in a three-dimensional coordinate system. In the related art, an iterative calculation is generally performed through a PnP (Perspective-n-Point) algorithm to obtain a 6D pose value. PnP (Perspective-n-Point) is a method for solving 3D to 2D point pair motion.

In this embodiment, the calculation of the PnP algorithm is performed on the first key points obtained at step 101, the predetermined three-dimensional point data, and the device parameter, to obtain a 6D pose value with a minimum error between the reprojection 2D result of the 3D model corresponding to the group of three-dimensional point data and the first key point error, and the overall pose of the accessory carrier in the accessory carrier image (which may generally be the pose of the accessory carrier at the shooting angle reflected by the device parameter) may be reflected by using the 6D pose value. The predetermined three-dimensional point data corresponds to a 3D model, the 3D model may simulate the accessory carrier, the geometry of the 3D model and the actual shape of the accessory carrier may tend to be consistent, for example, if the accessory carrier is a wrist, the 3D model may be a 3D model formed by combining a near rotating body, a near prism or a near pyramid, and the three-dimensional point data may be in a one-to-one correspondence with the first key points, that is, there may be 42 three-dimensional point data when there are 42 first key points. In some examples, the second key point does not participate in the solution of the PnP algorithm, and similarly, the second key point may not need to correspond to the three-dimensional point data. In a specific embodiment, taking the virtual accessory to be added as a watch and the number of the first key points being 42 as an example, when the watch is worn, the accessory carrier is a wrist to obtain 42 first key points, the 3D model may be a model corresponding to the wrist, 42 first key points corresponding to 42 points are predetermined on the model, and related data (for example, coordinate data, normal vector data, etc.) of the 42 points is three-dimensional point data. The device parameter should be understood as a parameter of the image collection device, including an internal parameter and an external parameter of the image collection device, where the image collection device may be a virtual camera, and the device parameter may be a setting parameter of the virtual camera. Taking a camera as an example, after an image is obtained, the image necessarily corresponds to a set of device parameters (external camera parameters such as a shooting angle, a shooting distance, a shooting point, and internal camera parameters, such as a focal length of the camera itself). The device parameter may be acquired directly from the image acquisition device, or may be calculated in real time according to the acquired image.

Step 103: adjust a pose of a virtual accessory carrier model based on the six-degree-of-freedom pose value, and obtain first edge points of the adjusted virtual accessory carrier model.

In some embodiments, the virtual accessory carrier model may be the same model as the 3D model mentioned in the embodiment of step 102, thereby facilitating the conversion or transfer of parameters such as 6D pose values and device parameters between different steps. After the pose of the virtual accessory carrier model is adjusted by using the six-degree-of-freedom pose value calculated in the foregoing step, first edge points of the adjusted virtual accessory carrier model need to be obtained, where the first edge points are obtained by projecting the virtual accessory carrier model. Therefore, the first edge point may have a corresponding projection parameter, the projection parameter may be determined based on the calculated 6D pose value and the device parameter, and the virtual accessory carrier model may be projected based on the projection parameter to obtain the first edge points of the virtual accessory carrier model. The projection parameter corresponding to the first edge point may be used to project the three-dimensional point of the pose adjusted virtual accessory carrier model to the image plane where the accessory carrier image is located.

Specifically, the virtual accessory carrier model may carry a corresponding virtual accessory model. Correspondingly, the virtual accessory model may have a corresponding predefined wearing region on the virtual accessory carrier model, and for different virtual accessories, the wearing region may also change accordingly. The position and the range of the wearing region may be determined according to the type and the parameter of the specific accessory, for example. For the wrist model, the wearing region is generally located in the middle of the wrist model, and for different accessories, the wearing region may also be finely adjusted, for example, the wearing region of the wrist corresponding to the watch may be farther away from one end of the hand than the wearing region of the wrist corresponding to the hand chain. This may be closer to the real habit of the user when wearing the watch and the bracelet, and the final simulation effect may be more realistic. Further, the first edge point of the virtual accessory carrier model may be determined in the wearing region, thereby further improving the wearing effect and the wearing fitting degree of the virtual accessory in the finally rendered image.

In some embodiments, obtaining the first edge points of the adjusted virtual accessory carrier model comprises: obtaining a three-dimensional edge point of the adjusted virtual accessory carrier model; projecting the three-dimensional edge point to obtain the first edge points.

Correspondingly, the three-dimensional edge point may be determined according to different data forms of the virtual accessory carrier model. Still taking the virtual wrist model as an example, for example, when the model is a triangular facet model, in the above predefined wearing region, a vertex located at an edge of the model under a corresponding projection view angle is selected as a three-dimensional edge point, and a 2D edge point obtained by projecting the obtained three-dimensional edge point is a first edge point. When the model is a point cloud model, in the predefined wearing region, 3D points located at an edge of the model under a corresponding projection view angle may be selected as three-dimensional edge points, and a 2D edge points obtained by projecting the obtained three-dimensional edge points are the first edge points.

Step 104: determine an adjustment parameter(s) of the virtual accessory carrier model based on the first edge points and the second key points, obtain a target virtual accessory carrier model based on the adjustment parameter(s), the target virtual accessory carrier model being mounted with a virtual accessory model, and obtain an accessory image of the virtual accessory model based on the device parameter.

Further, after the first edge point is determined, the adjustment parameter of the virtual accessory carrier model needs to be calculated by combining the second key point obtained in the foregoing step. For example, the corresponding adjustment parameter may be determined by making the first edge point infinitely close to the second edge point determined subsequently according to the second key point to meet the predetermined condition. For example, whether the distance between the first edge point and the second edge point corresponding to the first edge point is less than a predetermined threshold may be determined to determine whether the first edge point and the second edge point corresponding thereto satisfy the condition of "infinitely close".

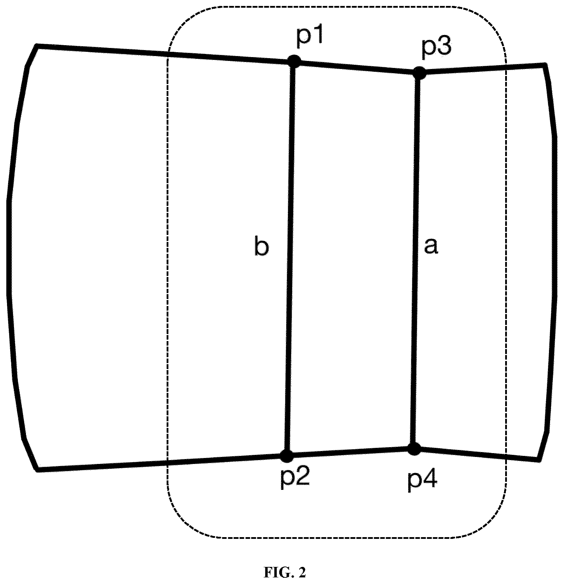

In some embodiments, the adjustment parameter(s) comprises a deformation parameter and a translation parameter of the virtual accessory carrier model, wherein the deformation parameter is configured to adjust a shape size of the virtual accessory carrier model, and the translation parameter is for adjusting at least part of components of the six-degree-of-freedom pose value. Taking the accessory carrier as the wrist as an example for description, the specific definition of the deformation parameter may refer to FIG. 2, and in FIG. 2, when the virtual watch model is used as the virtual accessory model, the virtual wrist model is used as the virtual accessory carrier model, the occlusion relationship between the two models is shown in FIG. 2, the part shown by the dotted circle in the figure is the predefined wearing region determined in the foregoing step, and a and b in the figure illustrate two radial connecting lines at the position corresponding to the edge contour of the virtual wrist model on the virtual wrist model after the , virtual watch model is fixed at a predefined wearing region of the virtual wrist model, specifically represented as two thick line segments in FIG. 2. Two ends of a respectively correspond to two three-dimensional edge points p3 and p4 located on the same periphery on the virtual wrist model, two ends of b respectively correspond to two three-dimensional edge points p1 and p2 located on the same periphery on the virtual wrist model. A length corresponding to the is defined as s1 (that is, a straight line distance between the three-dimensional edge points p3 and p4), a length corresponding to b is defined as s2 (that is, a straight line distance between the three-dimensional edge points p1 and p2). In some embodiments, the deformation parameter may be defined as a ratio of s2 to s1, the ratio may be used as a reflection of the radial deformation of the virtual accessory carrier model. By considering the deformation parameter in the adjustment parameter, the shape and size of the virtual accessory carrier model is more identical to the shape and size of the accessory carrier in the actually obtained accessory carrier image, thereby more truly reflecting the occlusion relationship between the user accessory carrier and the mount, and the user's try-on experience is improved. The translation parameter may refer to a fine adjustment of at least some of the six-degree-of-freedom pose values calculated by the algorithm (the six-degree-of-freedom pose value includes a three-degree-of-freedom rotation component and a three-degree-of-freedom translation component). Here, only the translation component may be fine-tuned. Correspondingly, in other mounting embodiments, the virtual accessory carrier model may also be adaptively adjusted according to the adjustment parameter, for example, when the necklace is used as the virtual accessory, the corresponding virtual accessory carrier model is the virtual neck model, so the corresponding deformation parameter may be set, so that the target image finally fed back to the user is more consistent with the actual situation, so that the corresponding virtual accessory necklace better fits the neck of the user.

In some embodiments, the virtual accessory carrier model corresponds to an accessory carrier, such as a virtual accessory carrier model of the wrist contour corresponding to the wrist accessory carrier, a virtual accessory carrier model of the ear contour corresponding to the ear accessory carrier, and the like. For example, if the user selects a watch, the model corresponding to the watch is the virtual accessory model, and the virtual accessory model is generally mounted on a corresponding virtual accessory carrier model. For example, the watch model is mounted on a model corresponding to the wrist, and the earring model is mounted on a model corresponding to an ear. Different virtual accessory models correspond to different mounting manners, since the virtual accessory model may be determined in advance, the carrier and the wearing mode of the accessory are also relatively fixed, and then the mounting mode of each virtual accessory model may also be defined in advance. For example, the watch is compactly wrapped on the virtual accessory carrier model corresponding to the wrist.

Then, the shape, size and pose of the virtual accessory carrier model are finely adjusted based on the adjustment parameters, so that the contour and pose reflected by the virtual accessory carrier model correspond to the contour and pose of the accessory carrier in the accessory carrier image. Then, the image acquisition is performed on the virtual accessory model under the current pose according to the pose information of the image acquisition device when the accessory carrier image is acquired, so as to obtain the corresponding accessory image. The contour and the pose of the virtual accessory carrier model correspond to the contour and the pose of the accessory carrier in the accessory carrier image under the adjustment of the adjustment parameter, so that the position relationship (for example, the occlusion relationship between the virtual accessory and the accessory carrier) related to the accessory carrier in the accessory carrier image is well simulated through the virtual accessory carrier model in the finally obtained accessory image, and the obtained accessory in the accessory image is more attached to the current accessory carrier. In addition, the virtual accessory carrier model mounted with the virtual accessory model is adjusted by using the adjustment parameters to obtain the target virtual accessory carrier model, so that the problem of model penetration can be effectively avoided.

In some embodiments, there may be a plurality of virtual accessory carrier models, when only a part of the virtual accessory carrier models is mounted with virtual accessory models, only the virtual accessory carrier models mounted with the virtual accessory models may be finely adjusted, so that the virtual accessory models fits the virtual accessory carrier model mounted thereon better. At the same time, the unmounted virtual accessory carrier model may be refrained from being adjusted, so that the workload of image processing may be effectively reduced. Certainly, all virtual accessory carrier models may be finely adjusted, so that the occlusion relationship between the virtual accessory carrier model and the virtual accessory model can be simulated more accurately, and the final rendering effect is further ensured.

Step 105: render the accessory image to the input image.

In some embodiments, the finally obtained accessory image is rendered to the input image, so that the accessory carrier therein presents the effect of wearing the virtual accessory. In some embodiments, since the input image may be a single-frame image or a multi-frame image, when multi-frame image rendering is performed, the input image of each frame may be rendered one by one, and then frame-by-frame display is performed to complete the processing of the multi-frame image. After the re-rendered input image is obtained, the re-rendered input image may be output. It may be used to store, display, use, or reprocess the re-rendered input image. The output manner of the input image may be flexibly selected according to different application scenarios and implementation requirements.

For example, for an application scenario executed by the method in this embodiment on a single device, the input image may be directly output on a display component (display, projector, etc.) of the current device in a display manner, so that an operator of the current device can directly see the content of the input image from the display component.

For another example, for an application scenario executed by the method in this embodiment on a system of a plurality of device groups, the input image may be sent to other predetermined devices, that is, the synchronization terminal, in the system through any data communication manner (wired connection, NFC, Bluetooth, WIFI, cellular mobile network, etc. ), that is, on the synchronization terminal, so that the synchronization terminal may perform subsequent processing on the input image. Optionally, the synchronization terminal may be a predetermined server, and the server is generally disposed in the cloud, and serves as a data processing and storage center, which can store and distribute the input image, where the distribution receiver is a terminal device, and a holder or operator of the terminal devices may be a to-be-purchased purchaser of the accessory, a current owner of the accessory, an operator or owner of the application, and the like.

For another example, for an application scenario executed by the method in this embodiment on a system of a plurality of device groups, the input image may be directly sent to a predetermined terminal device in any data communication manner, and the terminal device may be one or more of the foregoing paragraph lists.

As can be seen from the above, the image processing method provided by the present application includes: obtaining an accessory carrier image based on an input image, and performing a key point prediction on the accessory carrier image to obtain first key points and second key points, the second key points being located at an edge of an accessory carrier in the accessory carrier image; determining a six-degree-of- freedom pose value based on the first key points, predetermined three-dimensional point data, and a device parameter; adjusting a pose of a virtual accessory carrier model based on the six-degree-of-freedom pose value, and obtaining first edge points of the adjusted virtual accessory carrier model; determining an adjustment parameter(s) of the virtual accessory carrier model based on the first edge points and the second key points, obtaining a target virtual accessory carrier model based on the adjustment parameter(s), the target virtual accessory carrier model being mounted with a virtual accessory model, and obtaining an accessory image of the virtual accessory model based on the device parameter; and rendering the accessory image to the input image. According to the present application, the key points of the accessory carrier and the six-degree-of-freedom pose value are determined, the pose of the virtual accessory carrier model is adjusted through the six-degree-of-freedom pose value. The adjustment parameter of the virtual accessory carrier model is calculated based on the edge points obtained by projection in the adjusted virtual accessory carrier model and the obtained key points. The virtual accessory carrier model is adjusted based on the adjustment parameter to obtain the target virtual accessory carrier model, so that the real pose of the accessory carrier is simulated. Furthermore, the image of the virtual accessory model is obtained based on the image acquisition device set according to the device parameter, the real wearing effect of the accessory at a specific angle is simulated, the fitness of the virtual accessory with the virtual accessory carrier is further improved based on the above-mentioned adjustment of the parameters in the virtual accessory carrier model. The problem of model penetration caused by the virtual accessory carrier model and the virtual accessory model having an overlapping area in a three-dimensional space can be effectively avoided, the fitting degree and stability under the condition of fast movement can be improved, and finally the user experience during try-on is effectively improved.

In some embodiments, when the first edge points are determined in the predefined wearing region, a factor(s) that mainly affects the wearing effect and the wearing fitting degree needs to be considered, and therefore a specific number of first edge points may be determined based on the characteristics of the accessory. For example, when the virtual accessory is a watch, the wearing effect and the wearing fitting degree are mainly affected by the radial size of the corresponding virtual accessory carrier model, so that in the predefined wearing region, the points located at the edge of the same periphery of the virtual accessory carrier model under the foregoing projection angle may be selected and projected to determine the first edge point. Correspondingly, when the first edge points are determined according to the three-dimensional edge point of the virtual accessory carrier model obtained in the foregoing embodiment, the obtained at least two three-dimensional edge points may be located in the same periphery of the virtual accessory carrier model, so that the determined first edge point is more suitable for subsequent adjustment parameter determination.

With continued reference to FIG. 2, taking the virtual accessory carrier model being the virtual wrist model as an example for illustration, p1-p4 are one of the examples of the above three-dimensional edge points, wherein p1 and p2 are three-dimensional edge points of the same periphery, p3 and p4 are three-dimensional edge points of the same periphery. When taking the virtual wrist model as an example, the above two peripheries may be positions corresponding to two edge contours of the virtual accessory on the virtual wrist model, and further, corresponding first edge points may be obtained by projecting the three-dimensional edge points p1-p4. In some embodiments, a portion of the two edge contours and a portion other than the two edge contours may also be selected. In some embodiments, the three-dimensional edge point may be determined according to the parameter (for example, the accessory width) of the virtual accessory to be added, for example, four three-dimensional edge points may be determined according to the accessory width.

In some embodiments, the second key points comprise two groups of second key points, calculating the adjustment parameter(s) of the virtual accessory carrier model based on the first edge points and the second key points comprises: obtaining at least two first edge lines by fitting the two groups of second key points, respectively, each of the first edge points corresponding to one of the first edge lines; determining points corresponding to the first edge points on the corresponding first edge lines as second edge points; the first edge points being in a one-to-one correspondence with the second edge points; determining the adjustment parameter(s) of the virtual accessory carrier model based on the first edge points and the corresponding second edge points.

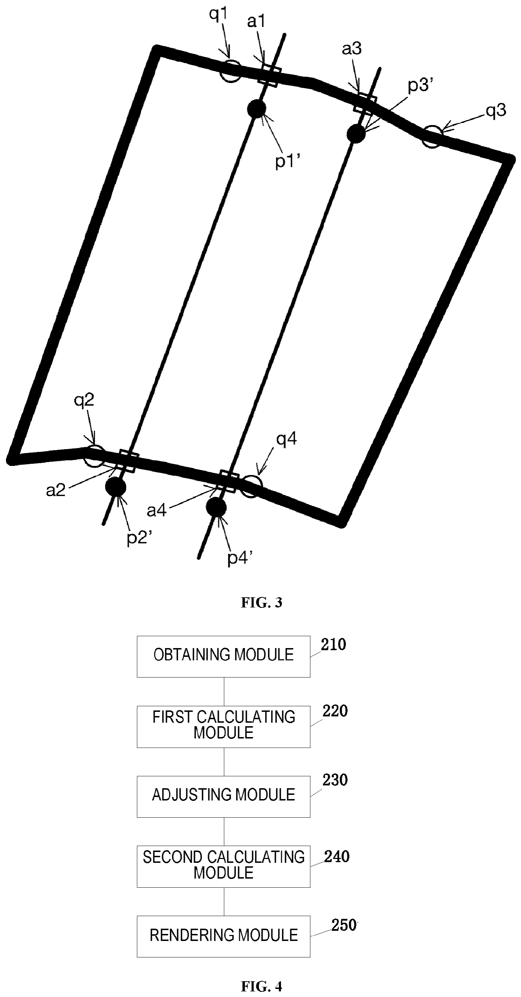

FIG. 3 is a schematic diagram of second edge points according to an embodiment of the present application.

FIG. 3 illustrates an actual obtained accessory carrier image by taking the accessory carrier being the wrist as an example, and the points q1-q4 in the figure illustrate the second key points obtained by performing key point prediction on the foregoing accessory carrier image, p1'-p4' illustrate the first edge points located on the image plane of the accessory carrier obtained through projection according to the foregoing steps, which may be in a one-to-one correspondence with p1-p4 in FIG. 2, and the state that the actual wrist contour is presented in the wrist image is illustrated. Because in the general case, there will be a corresponding error in the calculation process of the six-degree-of-freedom pose value, the virtual accessory carrier model adjusted by the six-degree-of-freedom pose value with the error also has a corresponding error, which is why the points p1', p2', p3', and p4' in the figure are offset from the actual wrist contour. In some embodiments, second key points in a same group may be located on a same side edge of the accessory carrier, as shown in FIG. 3, q1 and q3 are a group of second key points, q2 and q4 are a group of second key points, a first edge line is obtained by fitting q1 and q3, and a further first edge line is obtained by fitting q2 and q4. Further, based on the two first edge lines obtained by fitting the foregoing q1-q4, a point corresponding to the first edge point on the corresponding first edge line is determined as a second edge point. Referring to FIG. 3, for example, for the first edge point p1', a first edge line corresponding to the first edge line is a first edge line obtained by fitting q1 and q2, a point with the closest straight line distance to p1' may be searched on the first edge line, and it may be determined as a second edge point corresponding to p1', p2'-p4' are similar to p1'. It can be known from the above steps that the second edge point involved in the above step may be regarded as the ideal position of the first edge point, so the adjustment parameter may be determined by making the first edge point close to the second edge point. In addition, it should be noted that, those skilled in the art may certainly determine that the manner of determining the second edge point is not limited to the technical solutions shown above, and the same effect as shown in the above steps may be achieved by searching a point closest to the first edge point on the first edge line.

In some embodiments, the first edge points comprise at least one group of first edge points, determining the points corresponding to the first edge points on the corresponding first edge lines as the second edge points comprises: determining at least one second edge line based on the first edge points in a same group; determining second edge points corresponding to the first edge points on the corresponding first edge lines based on intersection points of the at least one second edge line with the at least two first edge lines.

In some embodiments, first edge points in a same group may be first edge points determined based on projecting edge points of the same periphery that are located on the virtual accessory carrier model. As shown in FIG. 3, p1' and p2' are a group of first edge points, p3' and p4' are a group of first edge points. Further, two first edge points p1' and p2' may be connected to obtain a second edge line, and two first edge points p3' and p4' are connected to obtain a further second edge line, so that each first edge line and each second edge line are intersected, so that four second edge points a1-a4 may be obtained. Correspondingly, point a1 is a position where the point p1' should have been located, point a2 is a position where the point p2' should have been located, point a3 is a position where the point p3' should have been located, and point a4 is a position where the point p4' should have been located. Correspondingly, the objective of this step is to improve the fitting degree between the accessory carrier and the accessory, and therefore, the calculation process of the adjustment parameter may be correspondingly converted into a process of bringing p1' and a1 close, p2' and a2 close, p3' and a3 close, and p4' and a4 close in FIG. 3.

In some embodiments, the least squares method (also referred to as a least-squares method) is a mathematical optimization technique. It finds the best function match for the data by minimizing the sum of squares of the error. Unknown data can be easily obtained by using least squares, and the sum of squares of errors between these obtained data and actual data is minimized. In some specific embodiments, the final adjustment parameter is solved by using a least squares method based on the first edge points and the second edge points, so that the first edge points are infinitely close to the second edge points.

Specifically, the adjustment parameter of the virtual accessory carrier model is obtained by using the least squares method through the following formula:

$$loss = \left| kp_{anchor\_proj} - kp_{edge} \right|^2$$

where *loss* represents a target function of the least squares method, $kp_{anchor\_proj}$ represents the first edge points, and $kp_{edge}$ represents the second edge points.

In a complete process of solving the adjustment parameter at one time, different first edge points and second edge points corresponding to the first edge points may be selected multiple times to perform multiple calculations on the adjustment parameters of the virtual accessory carrier model, and a final adjustment parameter is determined according to results of multiple calculations, so that the target virtual accessory carrier model is more closely attached.

As described above, in some embodiments, the adjustment parameter(s) comprises a deformation parameter and a translation parameter of the virtual accessory carrier model, wherein the deformation parameter is configured to adjust a shape size of the virtual accessory carrier model, and the translation parameter is for adjusting at least part of components of the six-degree-of-freedom pose value, obtaining the target virtual accessory carrier model based on the adjustment parameter(s) comprises: obtaining the target virtual accessory carrier model by performing a corresponding deformation on the adjusted virtual accessory carrier model based on the deformation parameter, and/or adjusting the at least part of components of the six-degree-of-freedom pose value of the virtual accessory carrier model based on the translation parameter.

With reference to the specific definition of the deformation parameter in the foregoing embodiment, with reference to FIG. 2 and FIG. 3, it should be understood that, $kp_{anchor\_proj}$ in the formula may be the first edge point obtained by projecting the two end points of the radial connection line a at a certain position of the virtual accessory carrier model and the first edge point obtained by projecting the two end points of the radial connection line b at the other position of the virtual accessory carrier model. Correspondingly, $kp_{edge}$ may be the second edge points respectively corresponding to the first edge point, and in the process of making the first edge point infinitely close to the corresponding second edge point, the ratio of the length s2 of b to the length s1 of a and the translation component in the six-degree-of-freedom pose value of the virtual accessory carrier model may be used as the solved parameter variables, and the values of the deformation parameter and the translation parameter may be obtained through the least squares method optimization.

In some embodiments, the virtual accessory carrier model is provided with a deformation parameter threshold, performing the corresponding deformation on the adjusted virtual accessory carrier model based on the deformation parameter comprises: in response to the deformation parameter exceeding the deformation parameter threshold, taking the deformation parameter threshold as a new deformation parameter; performing the corresponding deformation on the adjusted virtual accessory carrier model based on the new deformation parameter.

In some embodiments, taking the wrist virtual accessory watch as an example, because in the material preparation process, the virtual accessory (for example, a watch, a bracelet, etc.) needs to be bound to the virtual accessory carrier model, that is, the virtual accessory is properly mounted on the virtual accessory carrier model. However, the virtual accessory carrier model returned by the algorithm changes dynamically, because the wrist thicknesses of different users are different, the key points obtained in the foregoing steps are different. Therefore, in the process of performing subsequent calculation, the deformation parameter adjustment of the virtual accessory carrier model may also be different. In some embodiments, the size, length, or thickness of the virtual accessory may be fixed and does not change therewith. If the thickness of the wrist of the user is greater than the predetermined size of the virtual accessory, and the deformation parameter threshold is not set in advance, the phenomenon of model penetration may occur. That is, a part of the virtual accessory carrier model and the virtual accessory model have an overlapping area in the three-dimensional space to form a certain degree of occlusion. Therefore, in order to prevent the mold penetration phenomenon, in the binding process, when the calculated deformation parameter exceeds the predetermined maximum deformation parameter, the virtual accessory needs to be mounted on the target virtual accessory carrier model corresponding to the predetermined maximum deformation parameter (by way of example, the deformation parameter is s2/s1, that is, the contour line a is an end close to the hand, and the contour line b is an end away from the hand), that is, the target virtual accessory carrier model corresponding to the deformation parameter threshold. It should be noted that the calculation manner of the deformation parameter may not be limited to s2/s1, e.g., may be s1/s2. In a case where the deformation parameter is s1/s2, when the calculated deformation parameter exceeds the predetermined minimum deformation parameter, the virtual accessory needs to be mounted on the target virtual accessory carrier model corresponding to the predetermined minimum deformation parameter, that is, the target virtual accessory carrier model corresponding to the deformation parameter threshold. That is, the deformation parameter threshold may be an upper limit or a lower limit, depending on the calculation manner of the deformation parameter.

In addition, because the calculation of the deformation parameter is performed dynamically in real time, the deformation parameter solution result returned by the foregoing algorithm may also change dynamically, and a maximum value or a minimum value in the result may be used as a basis for adjusting the accessory carrier according to a plurality of deformation parameter solutions obtained within a certain time, so as to avoid a model penetration. Specifically, whether to take a maximum value or a minimum value depends on the foregoing calculation method of the deformation parameter threshold.

In some embodiments, obtaining the accessory carrier image based on the input image comprises: performing an accessory carrier recognition on the input image; in response to recognizing the accessory carrier, cropping the input image based on a position of the accessory carrier, and performing a normalization processing on the cropped input image to obtain the accessory carrier image.

In some embodiments, the user generally cannot directly provide an image containing only the accessory carrier. The user can generally provide an image or video with background or other limbs. For example, a user cannot directly provide a wrist only image, and the user can generally provide a captured wrist video or image containing background. In this case, the input images of these inputs need to be processed first. First, it is necessary to determine whether there is a required accessory carrier in the input image, and if not, directly return or directly end the task. If the accessory carrier is recognized, the region where the accessory carrier is located can be first positioned by using a detection model, and the image is cropped to obtain an image including the accessory carrier. Then, a normalization processing is performed to finally obtain the accessory carrier image. The normalization processing herein corresponds to an accessory carrier of the image carrier, such as left and right wrists, left and right ears, and the like. For these accessory carriers, for convenience of subsequent unified calculation, one side may be determined as a reference, and another side of accessory carrier image may be flipped, so that the accessory carrier is unified. Taking the left wrist and the right wrist as an example, the right wrist image may be set as a reference, and when the left wrist image is obtained, the left wrist image is flipped to obtain a mirror image of the left wrist image. That is, performing the normalization processing on the cropped input image to obtain the accessory carrier image comprises: in response to the accessory carrier being a mirror carrier of a predetermined standard carrier, flipping the cropped input image to obtain the accessory carrier image. Of course, those skilled in the art should understand that in another feasible embodiment, the left wrist image may be set as the reference, and correspondingly, when the right wrist image is acquired, the right wrist image is flipped.

In some embodiments, performing the accessory carrier recognition on the input image comprises: determining whether a confidence level of the input image is higher than a threshold; in response to the confidence level of the input image being higher than the threshold, determining that the accessory carrier is recognized in the input image, and cropping the input image based on a bounding box obtained by performing the accessory carrier recognition on the input image.

In some embodiments, in order to quickly position the accessory carrier, after the input image is acquired, it may be first determined whether an accessory carrier is recognized in an input image frame preceding the input image, and if recognized, the corresponding position is necessarily clipped when the previous frame is processed, and since the interval time of the two frames of image may be very short, the accessory carrier does not move relatively, so that the current frame of input image may be directly cropped according to the positioning and clipping positions of the previous frame, thereby improving the processing efficiency of the image.

In some embodiments, performing the accessory carrier recognition on the input image comprises: determining whether a confidence level of the input image is higher than a threshold; in response to the confidence level of the input image being higher than the threshold, determining that the accessory carrier is recognized in the input image, and cropping the input image based on a bounding box obtained by performing the accessory carrier recognition on the input image.

In some embodiments, the confidence level reveals the degree to which the true value of this parameter falls around the measurement result. It is seen that, the purpose of the above steps is to determine whether the input image includes a corresponding accessory carrier. When the confidence level of the input image is higher than the predetermined threshold, there is a large probability that the input image includes the target accessory carrier, and if the confidence level of the input image is lower than the predetermined threshold, there is a large probability that the input image does not include the target accessory carrier. That is, the confidence level here refers to the recognition result confidence level of performing the target recognition on the accessory carrier. For example, the accessory carrier is a wrist, when the input image is a hand plus a wrist, the confidence level is obviously higher than a predetermined threshold. In this case, it may be determined that the input image includes a target accessory carrier. Moreover, a further accessory carrier recognition is performed on the input image, that is, recognizing which specific part of the wrist is in the input image, and then the input image is cropped based on the recognized bounding box. When the input image is a finger image or a neck image, it is obvious that the confidence level of the input image is lower than a predetermined threshold, because there is no content related to the wrist in the input image. At this time, the user may be prompted, and if the input image is acquired in real time, the user may be prompted to switch the pose, so that the device capturing the input image can correctly capture the corresponding accessory carrier.

In some embodiments, obtaining the accessory carrier image based on the input image comprises: in response to obtaining a request operation for adding a virtual accessory, determining an accessory carrier corresponding to the virtual accessory, and generating prompt information for the accessory carrier to enable the accessory carrier to move and/or adjust a pose based on the prompt information; obtaining the input image through an image acquisition device, and recognizing an image of an accessory carrier in the input image to generate the accessory carrier image.

In some embodiments, when the user is viewing the introduction page of a certain accessory, the user may want to try on the accessory. To this end, a trigger area or a trigger button may be provided on the current page, and when the user triggers the trigger area or the trigger button, it is determined that the user performs a request operation that wants to add the virtual accessory, and the accessory viewed by the user is the corresponding virtual accessory. It is possible to first determine what accessory carrier is required for the virtual accessory, for example, the virtual earring accessory corresponds to the ear being the accessory carrier; and the virtual watch accessory corresponds to the wrist being the accessory carrier. After the corresponding accessory carrier is determined, prompt information may be generated according to a predetermined wearing posture, to prompt the user to make a corresponding gesture action by using the accessory carrier. Then, the image acquisition device is used to acquire the accessory carrier that has made a corresponding action, so as to finally generate a corresponding accessory carrier image. Thereby, a gesture reference can be provided for the user to wear corresponding accessories, so that the final virtual accessory image can be more easily attached to the accessory carrier image, the calculation and model adjustment processes are simplified, and the overall efficiency is improved.

In some embodiments, performing the key point prediction on the accessory carrier image comprises: performing the key point prediction on the accessory carrier image to obtain first key points and second key points, including: performing the key point prediction on the accessory carrier image based on a predetermined first key point prediction model to obtain the first key points; and performing the key point prediction on the accessory carrier image based on a predetermined second key point prediction model to obtain the second key points.

In some embodiments, the predicted key points include first key points and second key points, the first key point is mainly used for solving the PnP algorithm. The second key points are edge points of the accessory carrier in the accessory carrier image, and may not participate in the solution of the PnP algorithm in practice. Therefore, a further predetermined key point prediction model may be used to predict the key points.

In some embodiments, the method further includes training the first key point prediction model by: obtaining a training image and a first target model corresponding to the training image; projecting training three-dimensional point data on the first target model based on the device parameter and a standard six-degree-of-freedom pose value to obtain a first key point ground truth; training the first key point prediction model by using the training image and the first key point ground truth until a predetermined training condition is reached.

In some embodiments, for the prediction of the first key point, the prediction may be performed by using the corresponding first key point prediction model. The first key point prediction model may be a key prediction method based on a thermodynamic diagram, for example, a Hourglass network, or may be a key point prediction method based on a fully connected layer, for example, directly regressing relative coordinates of each point by using a classification network. In the process of training the first key point prediction model, obtaining a training image and a first target model corresponding to the training image; projecting training three-dimensional point data on the first target model based on the device parameter and a standard six-degree-of-freedom pose value to obtain a first key point ground truth; training the first key point prediction model by using the training image and the first key point ground truth until a predetermined training condition is reached. The training image and the target model are the predetermined training image and the corresponding accurate target model, the training image generally includes an image of the training accessory carrier, and the target model is a training 3D model capable of simulating the accessory carrier. By projecting the three-dimensional point data (for example, the 3D point data) on the target model based on the standard six-degree-of-freedom pose value based on corresponding equipment parameters, corresponding 2D plane point data, namely the first key point ground truth, may be obtained. The number of the three-dimensional point data is the same as the number of the data of the key point result required for training, and there may be a one-to-one correspondence between the position of the three-dimensional point data and the position of the point of the key point result. Then, the key point prediction model is trained according to the training image and the obtained key point ground truth until a predetermined training condition is reached.

In some embodiments, the method further includes training the second key point prediction model by: obtaining a training image and a second target model corresponding to the training image; performing edge point labeling and projection on the second target model to obtain a second key point ground truth; and training the second key point prediction model by using the training image and the second key point ground truth until a predetermined training condition is reached.

In some embodiments, the prediction of the second key point may be performed by using a corresponding second key point prediction model. The second key point model may be a deep learning neural network model. In the process of training the second key point prediction model, obtaining a training image and a target model corresponding to the training image; manually labeling and projecting the target model to obtain a second key point ground truth, and training the second key point prediction model by using the training image and the second key point ground truth until a predetermined training condition is reached. The training image and the target model are the predetermined training image and the corresponding accurate target model, the training image generally includes an image of the training accessory carrier, and the target model is a training 3D model capable of simulating the accessory carrier. The 3D model is manually labeled and projected to obtain the second key point ground truth. Then, the key point prediction model is trained according to the training image and the obtained ground truth value until a predetermined training condition is reached.

The ground truth of the first key points and/or the second key points may be obtained by manually labeling the 2D key points directly on the training image.

In some embodiments, when the accessory carrier image is an image sequence, generating the first key points and the second key points comprises: performing a smoothing processing on the first key points and/or the second key points based on optical flow information and/or timing information of the accessory carrier image.

In some embodiments, in order to prevent the generated first key points and/or the second key points from jittering suddenly, the first key points and/or the second key points may be smoothed after the first key points and/or the second key points are calculated. Here, the smoothing may be performed based on the optical flow information and/or the timing information of the accessory carrier image. Because the accessory carrier image may be an image sequence of a plurality of frames, when the image of the accessory carrier for the plurality of frames needs to be considered, because image coherence between adjacent frames needs to be considered, abrupt changes may not occur, and then a corresponding smoothing process may be performed on each frame of image one by one, so that a smooth transition may be performed between the front and back frames. The smoothing processing may be based on one of optical flow information or timing information, or may be based on the two types of information, and the sequential relationship between the two types of information may be specifically adjusted according to a specific application scenario. It should be noted that, for the second key points, the second key points may be smoothed, or the second key points may not be smoothed. In some embodiments, if the computing power is limited, only the first key points related to the PnP solution may be smoothed to reduce the overall calculation amount.

In some embodiments, since the smoothing processing is to be performed, the general smoothing processing is implemented based on the current frame and a preceding frame(s) or a following frame(s) of the image sequence, so that there is a certain image lag phenomenon when processing is performed (to ensure that the current frame has a following image frame). Generally, the current frame may be set as the second frame before the currently acquired image or the third frame before the currently acquired image, so that the current frame has a following image frame(s). For example, if the current frame is the third frame before the currently acquired image, the preceding frame of the current frame is the fourth frame before, and the next frame of the current frame is the second frame before.

Then, for the smoothing processing based on the optical flow information, in some embodiments, the first key points and/or the second key points of the adjacent frame of the current frame image may be extracted first, a corresponding transformation matrix between the current frame and the adjacent frame is calculated based on the optical flow method, and then the key point optical flow tracking result of the current frame (that is, the optical flow information of the accessory carrier image) may be obtained according to the transformation matrix and the obtained first key points and/or the second key points of the adjacent frame. The adjacent frame here may be the previous frame and/or the next frame of the current frame. Then, weighted summation is performed based on the obtained key point model prediction result of the current frame and the obtained key points optical flow tracking result, to obtain the smoothed first key points and/or the smoothed second key points. The model prediction result is a result of performing key point prediction by using first key points and/or second key points calculated by using a conventional deep learning network, e.g., a Stacked Hourglass network. In a specific embodiment, a LK optical flow algorithm (Lucas-Kanade optical flow algorithm) may be used to perform smoothing processing based on optical flow information, and the specific formula is as follows:

$$kp2d = \omega * kp_{flow} + (1 - \omega) * kp_{nn}$$

where $kp2d$ represents the smoothed first key points and/or the smoothed second key points, $\omega$ is a weight, $kp_{flow}$ is the key point optical flow tracking result, and $kp_{nn}$ is a key point model prediction result.

For the smoothing processing based on the timing information, in some embodiments, the timing information is a time sequence set formed by a plurality of frames before and after the current frame, and the smoothing processing is to perform weighted summation on the first key points and/or the second key points corresponding to the time sequence set, to determine the first key points and/or the second key points of the current frame after the time sequence smoothing. In a specific application scenario, the smoothing processing may be performed based on a time sequence weighting algorithm, and the algorithm formula is as follows: n is the current frame, n-1 is the previous frame, n + 1 is the next frame, and so on. Due to the utilization of delayed frame information, the finally resulting image needs to be synchronously delayed by n frames.

$$kp_{smooth} = kp_1 * \omega_1 + kp_2 * \omega_2 + \cdots + kp_{2n+1} * \omega_{2n+1}$$

$$\omega_1 + \omega_2 + \cdots + \omega_{2n+1} = 1$$

where $kp_{smooth}$ is the smooth result of time sequence smoothing, $kp_1$ to $kp_{2n+1}$ correspond to the first key points and/or the second key points of the 1st frame to the (2n+1)-th frame, respectively, where the n-th frame is the current frame, $\omega_1$ to $\omega_{2n+1}$ are corresponding weights, and the sum of all weights is 1.

Since the smoothing processing based on the optical flow information and the smoothing processing based on the timing information may be used separately, or may be used together, and in a case where the two are used together, a subsequent smoothing processing may be performed on the basis of the result of a previous smoothing processing. For example, the smoothing processing based on the optical flow information is performed at first, and the obtained first key points and/or the second key points of the current frame may be directly used as the first key points and/or the second key points of the current frame for performing a subsequent smoothing processing based on the timing information.

Although the smoothing performed in the foregoing manner may cause the picture to be slightly delayed (which may be specifically set, for example, set to delay 3 frames of picture, etc.), the smoothed result does not cause problems such as jitter, and the problem of accessory jitter during rendering is prevented.

In some embodiments, determining the six-degree-of-freedom pose value based on the first key points, the predetermined three-dimensional point data, and the device parameter comprises: projecting the three-dimensional point data based on the device parameter to obtain a projection result; calculating an error value between the projection result and the first key points; adjusting the three-dimensional point data, repeatedly calculating the error value, and calculating the six-degree-of-freedom pose value based on the three-dimensional point data corresponding to the minimum error value.

In some embodiments, the calculation of six-degree-of-freedom pose values (6D pose values) may be performed by solving a PnP (Perspective-n-Point) problem. The projection result is a re-projection 2D result of the 3D model corresponding to the three-dimensional point data. Then, an error value between the projection result and the first key points is calculated. The three-dimensional point data is adjusted again, the error value is repeatedly calculated, iterative calculation is carried out, three-dimensional point data corresponding to the minimum error value is calculated, and the six-degree-of-freedom pose value of the current 3D model can be obtained according to the three-dimensional point data, namely the corresponding 3D model.

In some embodiments, after calculating the six-degree-of-freedom pose value, the method further comprises: performing a smoothing processing on a rotation value in the six-degree-of-freedom pose value by using an interpolation algorithm, and/or performing a smoothing processing on a translation value in the six-degree-of-freedom pose value by using a time sequence weighting algorithm.

In some embodiments, similar to the foregoing embodiments, in order to prevent the generated six-degree-of-freedom pose value from jittering suddenly, the six-degree-of-freedom pose value may be smoothed after the six-degree-of-freedom pose value is calculated. The six-degree-of-freedom pose value generally includes three-degree-of-freedom rotation values and three-degree-of-freedom translation values. Further, the rotation values of the three degrees of freedom may be smoothed by using an interpolation algorithm, and the translation values of the three degrees of freedom are smoothed by using a time sequence weighting algorithm similar to the foregoing embodiment. In a specific embodiment, taking the spherical linear interpolation algorithm of the interpolation algorithm as an example, the spherical linear interpolation algorithm is a Slerp interpolation algorithm, and the spherical linear interpolation (Slerp) is a linear interpolation operation of quaternion, and is mainly used for smoothing interpolation between two quaternions representing rotation.

In a specific embodiment, for the translation values of three degrees of freedom, the three translation values corresponding to the several frames before and/or after the current frame may be weighted and summed (for example, from the 1st frame to the (2n + 1)-th frame, where the n-th frame is the current frame), so as to smooth the three translation values of the current frame, and the specific formula may be similar to the algorithm formula of the foregoing embodiment. For the rotation values of three degrees of freedom, the Slerp interpolation algorithm can be used to obtain the final smoothed rotation value based on the rotation quaternion of the previous frame and the rotation quaternion of the current frame, and then based on the difference weight calculated by the two rotation quaternions. The specific formula is as follows:

$$\begin{cases} r = a(t)p + b(t)q \\ a(t) = \dfrac{cost\theta - cos[(1-t)\theta]cos\theta}{1 - cos^2\theta} \\ b(t) = \dfrac{cos[(1-t)\theta] - cost\theta cos\theta}{1 - cos^2\theta} \end{cases}$$

where r is the smoothed rotation value, p and q are the rotation quaternions of the previous frame and the current frame, respectively, t is the difference weight, and $\theta$ is the included angle between p and q.

It should be noted that, in some other embodiments, since other numerical values may be smoothed in advance, for example, when the calculation of the first key points is performed, the first key points is smoothed. Since the first key points are mainly the calculation in the plane, the translation value is mainly affected, and if the first key points have been smoothed, the smoothing processing of the three-degree-of-freedom translation value may be omitted when smoothing the six-degree-of-freedom pose value, and only the smoothing processing of the three-degree-of-freedom rotation value is performed. Certainly, if the smoothing processing which mainly affects the corresponding parameter of the rotation value has been performed in the preceding step, the smoothing processing of the three-degree-of-freedom rotation value may be omitted here, and only the smoothing processing of the three-degree-of-freedom translation value is performed. Even if both the three-degree-of-freedom rotation value and the three-degree-of-freedom translation value have been smoothed in the preceding step, smoothing processing of the six-degree-of-freedom pose value may also be omitted here.

It should be noted that the method in this embodiment of the present application may be performed by a single device, for example, a computer or a server. The method in this embodiment of the present application may also be applied to a distributed scenario, and the plurality of devices cooperate to complete. In this distributed scenario, one of the plurality of devices may execute only one or more steps of the method according to the embodiments of the present application, and the plurality of devices interact with each other to complete the method.

It should be noted that the foregoing describes a specific embodiments of the present application. Other embodiments are within the scope of the appended claims. In some cases, the acts or steps recited in the claims may be performed in a different order than in the above embodiments and still achieve the desired results. Additionally, the processes depicted in the figures do not necessarily require a particular order or sequential order shown to achieve the desired results. In certain embodiments, multitasking and parallel processing are also possible or may be advantageous.

Based on the same concept, the present disclosure further provides an image processing apparatus corresponding to any of the above embodiments.

Referring to FIG. 4, the image processing apparatus includes:

an obtaining module 210, configured to obtain an accessory carrier image based on an input image, and perform a key point prediction on the accessory carrier image to obtain first key points and second key points, the second key points being located at an edge of the accessory carrier image;

a first calculating module 220 configured to determine a six-degree-of-freedom pose value based on the first key points, predetermined three-dimensional point data, and a device parameter;

an adjusting module 230, configured to adjust a pose of a virtual accessory carrier model based on the six-degree-of-freedom pose value, and obtain first edge points of the adjusted virtual accessory carrier model;

a second calculating module 240, configured to determine an adjustment parameter(s) of the virtual accessory carrier model based on the first edge points and the second key points, obtain a target virtual accessory carrier model based on the adjustment parameter(s), the target virtual accessory carrier model being mounted with a virtual accessory model, and obtain an accessory image of the virtual accessory model based on the device parameter;

a rendering module250, configured to render the accessory image to the input image.

For convenience of description, the above apparatus is described with functionality being divided into various modules when the above apparatus is described. Certainly, when implementing the embodiments of the present application, functions of the modules may be implemented in one or more software and/or hardware.

The apparatus of the foregoing embodiment is configured to implement the corresponding image processing method in the foregoing embodiments, and has the beneficial effects of the corresponding method embodiments, and details are not described herein again.

In some embodiments, the adjusting module 230 is further configured to:

obtain a three-dimensional edge point of the adjusted virtual accessory carrier model;
project the three-dimensional edge point to obtain the first edge points.

In some embodiments, the second key points comprise two groups of second key points,
the second calculating module 240 is further configured to:

obtain at least two first edge lines by fitting the two groups of second key points, respectively, each of the first edge points corresponding to one of the first edge lines;
determine points corresponding to the first edge points on the corresponding first edge lines as second edge points;
the first edge points being in a one-to-one correspondence with the second edge points;
determine the adjustment parameter(s) of the virtual accessory carrier model based on the first edge points and the corresponding second edge points.

In some embodiments, the first edge points comprise at least one group of first edge points,
the second calculating module 240 is further configured to:

determine at least one second edge line based on the first edge points in a same group;
determine second edge points corresponding to the first edge points on the corresponding first edge lines based on intersection points of the at least one second edge line with the at least two first edge lines.

In some embodiments, the adjustment parameter(s) comprises a deformation parameter and a translation parameter of the virtual accessory carrier model, wherein the deformation parameter is configured to adjust a shape size of the virtual accessory carrier model, and the translation parameter is for adjusting at least part of components of the six-degree-of-freedom pose value,
the second calculating module 240 is further configured to:
obtain the target virtual accessory carrier model by performing a corresponding deformation on the adjusted virtual accessory carrier model based on the deformation parameter, and/or adjusting the at least part of components of the six-degree-of-freedom pose value of the virtual accessory carrier model based on the translation parameter.

In some embodiments, the virtual accessory carrier model is provided with a deformation parameter threshold,
the second calculating module 240 is further configured to:

in response to the deformation parameter exceeding the deformation parameter threshold, take the deformation parameter threshold as a new deformation parameter;
perform the corresponding deformation on the adjusted virtual accessory carrier model based on the new deformation parameter.

In some embodiments, the obtaining module 210 is further configured to:

perform an accessory carrier recognition on the input image;
in response to recognizing the accessory carrier, crop the input image based on a position of the accessory carrier, and perform a normalization processing on the cropped input image to obtain the accessory carrier image.

In some embodiments, the obtaining module 210 is further configured to:
in response to the accessory carrier being a mirror carrier of a predetermined standard carrier, flip the cropped input image to obtain the accessory carrier image.

In some embodiments, the obtaining module 210 is further configured to:

determine whether a confidence level of the input image is higher than a threshold;
in response to the confidence level of the input image being higher than the threshold, determine that the accessory carrier is recognized in the input image, and crop the input image based on a bounding box obtained by performing the accessory carrier recognition on the input image.

In some embodiments, the obtaining module 210 is further configured to:

in response to obtaining a request operation for adding a virtual accessory, determine an accessory carrier corresponding to the virtual accessory, and generate prompt information for the accessory carrier to enable the accessory carrier to move and/or adjust a pose based on the prompt information;
obtain the input image through an image acquisition device, and recognize an image of an accessory carrier in the input image to generate the accessory carrier image.

In some embodiments, when the accessory carrier image is an image sequence, the obtaining module 210 is further configured to:
perform a smoothing processing on the first key points and/or the second key points based on optical flow information and/or timing information of the accessory carrier image.

In some embodiments, the calculation module 220 is further configured to:

project the three-dimensional point data based on the device parameter to obtain a projection result;
calculate an error value between the projection result and the first key points;
adjust the three-dimensional point data, repeatedly calculate the error value, and calculate the six-degree-of-freedom pose value based on the three-dimensional point data corresponding to the minimum error value.

In some embodiments, the calculation module 220 is further configured to:
perform a smoothing processing on a rotation value in the six-degree-of-freedom pose value by using an interpolation algorithm, and/or perform a smoothing processing on a translation value in the six-degree-of-freedom pose value by using a time sequence weighting algorithm.

Based on the same concept, the present disclosure further provides an electronic device comprising a memory, a processor, and a computer program stored on the memory and executable on the processor, wherein when executing the program, the processor implements the method according to any one of the above embodiments is implemented.

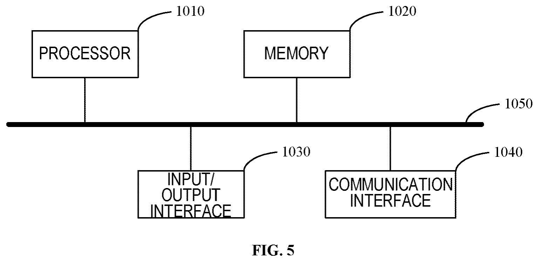

FIG. 5 is a schematic structural diagram of a more specific hardware structure of an electronic device according to this embodiment, and the device may include a processor 1010, a memory 1020, an input/output interface 1030, a communications interface 1040, and a bus 1050. The processor 1010, the memory 1020, the input/output interface 1030, and the communications interface 1040 implement, by using the bus 1050, a communication connection with each other inside the device.

The processor 1010 may be implemented by using a general-purpose central processing unit (CPU), a microprocessor, an application specific integrated circuit (ASIC), or one or more integrated circuits, and is configured to execute related programs to implement the technical solutions provided in the embodiments of the present specification.

The memory 1020 may be implemented in a form of a ROM (Read Only Memory), a Random Access Memory (RAM), a static storage device, a dynamic storage device, or the like. The memory 1020 may store an operating system and other applications, and when implementing the technical solutions provided in the embodiments of the present specification by using software or firmware, related program code is stored in the memory 1020 and invoked and executed by the processor 1010.

The input/output interface 1030 is configured to connect the input/output module to implement information input and output. The input/output module may be configured as a component in the device (not shown in the figure), or may be externally connected to the device to provide a corresponding function. The input device may include a keyboard, a mouse, a touch screen, a microphone, various sensors, etc., and the output device may include a display, a speaker, a vibrator, an indicator light, and the like.

The communications interface 1040 is configured to connect a communications module (not shown in the figure), to implement communications interaction between the device and another device. The communications module may implement communications in a wired manner (for example, a USB or a network cable), or may implement communications in a wireless manner (for example, a mobile network, a Wi-Fi, a Bluetooth, and the like).

The bus 1050 includes a path to transfer information between various components of the device, such as the processor 1010, the memory 1020, the input/output interface 1030, and the communication interface 1040.

It should be noted that although the foregoing device only shows the processor 1010, the memory 1020, the input/output interface 1030, the communications interface 1040, and the bus 1050, in a specific implementation process, the device may further include other components necessary to implement normal running. In addition, those skilled in the art may understand that the foregoing device may also include only components necessary for implementing the solutions in the embodiments of the present specification, and does not necessarily include all components shown in the figure.

The electronic device of the foregoing embodiment is configured to implement the corresponding image processing method in any one of the foregoing embodiments, and has the beneficial effects of the corresponding method embodiments, and details are not described herein again.

Based on the same concept, the present disclosure further provides a non-transitory computer-readable storage medium storing computer instructions for causing the computer to perform the image processing method according to any one of the above embodiments.

Computer-readable media of the present embodiments include permanent and non-permanent, removable and non-removable media, which may be implemented by any method or technology. The information may be computer readable instructions, data structures, modules of a program, or other data. Examples of computer storage media include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, compact disc read-only memory (CD-ROM), digital versatile disc (DVD) or other optical storage, magnetic cassettes, magnetic tape magnetic disk storage or other magnetic storage devices, or any other non-transmission medium, which can be used to store information that can be accessed by a computing device.

The computer instructions stored in the storage medium in the foregoing embodiments are configured to cause the computer to perform the image processing method according to any one of the foregoing embodiments, and have the beneficial effects of the corresponding method embodiments, and details are not described herein again.

It should be understood by those of ordinary skill in the art that the foregoing discussion of any embodiment is merely exemplary, and is not intended to suggest that the scope of the present application (including the claims) is limited to these examples; in the spirit of the present application, the above embodiments or the technical features in different embodiments may also be combined, and the steps may be implemented in any order, and there are many other changes in different aspects of the embodiments of the present application as described above.

Additionally, for simplicity of illustration and discussion, and to not obscure embodiments of the present application, well-known power / ground connections to integrated circuit (IC) chips and other components may or may not be shown in the figures provided. Furthermore, the apparatus may be shown in block diagram form in order to avoid obscuring the embodiments of the present application, and this also takes into account the fact that the details regarding the implementation of these block diagram devices are highly dependent on the platform in which the embodiments of the present application are to be implemented (i.e., these details should be fully within the understanding of those skilled in the art). Having set forth specific details (e.g., circuits) to describe exemplary embodiments of the present application, it will be apparent to those skilled in the art that embodiments of the present application may be practiced without these specific details or with changes to these specific details. Accordingly, these descriptions should be considered illustrative and not limiting.

Although the present application has been described in conjunction with specific embodiments of the present application, many alternatives, modifications and variations of these embodiments will be apparent to those of ordinary skill in the art from the foregoing description. For example, other memory architectures (e.g., dynamic RAM (DRAM)) may use the embodiments discussed.

The present application is intended to cover all such alternatives, modifications and variations that fall within the broad scope of the appended claims. Therefore, any omission, modification, equivalent replacement, improvement and the like that are made within the spirit and principle of the embodiments of the present application should be included within the protection scope of the present application.

## Claims

1. An image processing method, comprising:

   obtaining an accessory carrier image based on an input image, and performing a key point prediction on the accessory carrier image to obtain first key points and second key points, the second key points being located at an edge of an accessory carrier in the accessory carrier image;
   determining a six-degree-of-freedom pose value based on the first key points, predetermined three-dimensional point data, and a device parameter;
   adjusting a pose of a virtual accessory carrier model based on the six-degree-of-freedom pose value, and obtaining first edge points of the adjusted virtual accessory carrier model;
   determining an adjustment parameter(s) of the virtual accessory carrier model based on the first edge points and the second key points, obtaining a target virtual accessory carrier model based on the adjustment parameter(s), the target virtual accessory carrier model being mounted with a virtual accessory model, and obtaining an accessory image of the virtual accessory model based on the device parameter;
   rendering the accessory image to the input image.

2. The method of claim 1, wherein obtaining the first edge points of the adjusted virtual accessory carrier model comprises:

    obtaining a three-dimensional edge point of the adjusted virtual accessory carrier model;
    projecting the three-dimensional edge point to obtain the first edge points.

3. The method of claim 1, wherein the second key points comprise two groups of second key points, calculating the adjustment parameter(s) of the virtual accessory carrier model based on the first edge points and the second key points comprises:

    obtaining at least two first edge lines by fitting the two groups of second key points, respectively, each of the first edge points corresponding to one of the first edge lines;
    determining points corresponding to the first edge points on the corresponding first edge lines as second edge points; the first edge points being in a one-to-one correspondence with the second edge points;
    determining the adjustment parameter(s) of the virtual accessory carrier model based on the first edge points and the corresponding second edge points.

4. The method of claim 3, wherein the first edge points comprise at least one group of first edge points, determining the points corresponding to the first edge points on the corresponding first edge lines as the second edge points comprises:

    determining at least one second edge line based on the first edge points in a same group;
    determining second edge points corresponding to the first edge points on the corresponding first edge lines based on intersection points of the at least one second edge line with the at least two first edge lines.

5. The method of claim 1, wherein the adjustment parameter(s) comprises a deformation parameter and a translation parameter of the virtual accessory carrier model, wherein the deformation parameter is configured to adjust a shape size of the virtual accessory carrier model, and the translation parameter is for adjusting at least part of components of the six-degree-of-freedom pose value,
obtaining the target virtual accessory carrier model based on the adjustment parameter(s) comprises:
obtaining the target virtual accessory carrier model by performing a corresponding deformation on the adjusted virtual accessory carrier model based on the deformation parameter, and/or adjusting the at least part of components of the six-degree-of-freedom pose value of the virtual accessory carrier model based on the translation parameter.

6. The method of claim 5, wherein the virtual accessory carrier model is provided with a deformation parameter threshold,
performing the corresponding deformation on the adjusted virtual accessory carrier model based on the deformation parameter comprises:

    in response to the deformation parameter exceeding the deformation parameter threshold, taking the deformation parameter threshold as a new deformation parameter;
    performing the corresponding deformation on the adjusted virtual accessory carrier model based on the new deformation parameter.

7. The method of claim 1, wherein obtaining the accessory carrier image based on the input image comprises:

    performing an accessory carrier recognition on the input image;
    in response to recognizing the accessory carrier, cropping the input image based on a position of the accessory carrier, and performing a normalization processing on the cropped input image to obtain the accessory carrier image.

8. The method of claim 7, wherein performing the normalization processing on the cropped input image to obtain the accessory carrier image comprises:
in response to the accessory carrier being a mirror carrier of a predetermined standard carrier, flipping the cropped input image to obtain the accessory carrier image.

9. The method of claim 7, wherein performing the accessory carrier recognition on the input image comprises:

determining whether a confidence level of the input image is higher than a threshold;
in response to the confidence level of the input image being higher than the threshold, determining that the accessory carrier is recognized in the input image, and cropping the input image based on a bounding box obtained by performing the accessory carrier recognition on the input image.

10. The method of claim 1, wherein obtaining the accessory carrier image based on the input image comprises:

in response to obtaining a request operation for adding a virtual accessory, determining an accessory carrier corresponding to the virtual accessory, and generating prompt information for the accessory carrier to enable the accessory carrier to move and/or adjust a pose based on the prompt information;
obtaining the input image through an image acquisition device, and recognizing an image of an accessory carrier in the input image to generate the accessory carrier image.

11. The method of claim 1, wherein when the accessory carrier image is an image sequence, generating the first key points and the second key points comprises:
performing a smoothing processing on the first key points and/or the second key points based on optical flow information and/or timing information of the accessory carrier image.

12. The method of claim 1, wherein determining the six-degree-of-freedom pose value based on the first key points, the predetermined three-dimensional point data, and the device parameter comprises:

projecting the three-dimensional point data based on the device parameter to obtain a projection result;
calculating an error value between the projection result and the first key points;
adjusting the three-dimensional point data, repeatedly calculating the error value, and calculating the six-degree-of-freedom pose value based on the three-dimensional point data corresponding to the minimum error value.

13. The method of claim 12, wherein after calculating the six-degree-of-freedom pose value, the method further comprises:
performing a smoothing processing on a rotation value in the six-degree-of-freedom pose value by using an interpolation algorithm, and/or performing a smoothing processing on a translation value in the six-degree-of-freedom pose value by using a time sequence weighting algorithm.

14. An image processing apparatus, comprising:

an obtaining module, configured to obtain an accessory carrier image based on an input image, and perform a key point prediction on the accessory carrier image to obtain first key points and second key points, the second key points being located at an edge of the accessory carrier image; a first calculating module configured to determine a six-degree-of-freedom pose value based on the first key points, predetermined three-dimensional point data, and a device parameter;
an adjusting module, configured to adjust a pose of a virtual accessory carrier model based on the six-degree-of-freedom pose value, and obtain first edge points of the adjusted virtual accessory carrier model;
a second calculating module, configured to determine an adjustment parameter(s) of the virtual accessory carrier model based on the first edge points and the second key points, obtain a target virtual accessory carrier model based on the adjustment parameter(s), the target virtual accessory carrier model being mounted with a virtual accessory model, and obtain an accessory image of the virtual accessory model based on the device parameter;
a rendering module, configured to render the accessory image to the input image.

15. An electronic device, comprising a memory, a processor, and a computer program stored on the memory and executable on the processor, wherein when executing the program, the processor implements the method according to any of claims 1 to 13.

16. A non-transitory computer-readable storage medium storing computer instructions, wherein the computer instructions are configured to cause a computer to perform the method according to any of claims 1 to 13.

101 — OBTAIN AN ACCESSORY CARRIER IMAGE BASED ON AN INPUT IMAGE, AND PERFORM A KEY POINT PREDICTION ON THE ACCESSORY CARRIER IMAGE TO OBTAIN FIRST KEY POINTS AND SECOND KEY POINTS, THE SECOND KEY POINTS BEING LOCATED AT AN EDGE OF THE ACCESSORY CARRIER IMAGE

102 — DETERMINE A SIX-DEGREE-OF-FREEDOM POSE VALUE BASED ON THE FIRST KEY POINTS, PREDETERMINED THREE-DIMENSIONAL POINT DATA, AND A DEVICE PARAMETER

103 — ADJUST A POSE OF A VIRTUAL ACCESSORY CARRIER MODEL BASED ON THE SIX-DEGREE-OF-FREEDOM POSE VALUE, AND OBTAIN FIRST EDGE POINTS OF THE ADJUSTED VIRTUAL ACCESSORY CARRIER MODEL

104 — DETERMINE AN ADJUSTMENT PARAMETER(S) OF THE VIRTUAL ACCESSORY CARRIER MODEL BASED ON THE FIRST EDGE POINTS AND THE SECOND KEY POINTS, OBTAIN A TARGET VIRTUAL ACCESSORY CARRIER MODEL BASED ON THE ADJUSTMENT PARAMETER(S), THE TARGET VIRTUAL ACCESSORY CARRIER MODEL BEING MOUNTED WITH A VIRTUAL ACCESSORY MODEL, AND OBTAIN AN ACCESSORY IMAGE OF THE VIRTUAL ACCESSORY MODEL BASED ON THE DEVICE PARAMETER

105 — RENDER THE ACCESSORY IMAGE TO THE INPUT IMAGE

FIG. 1

**FIG. 2**

FIG. 3

FIG. 4

PROCESSOR — 1010

MEMORY — 1020

— 1050

INPUT/
OUTPUT
INTERFACE — 1030

COMMUNICATION
INTERFACE — 1040

**FIG. 5**

## INTERNATIONAL SEARCH REPORT

| International application No. |
|---|
| **PCT/CN2024/076736** |

### A. CLASSIFICATION OF SUBJECT MATTER

G06T 19/20(2011.01)i

According to International Patent Classification (IPC) or to both national classification and IPC

### B. FIELDS SEARCHED

Minimum documentation searched (classification system followed by classification symbols)

G06T, G06F, G06K

Documentation searched other than minimum documentation to the extent that such documents are included in the fields searched

Electronic data base consulted during the international search (name of data base and, where practicable, search terms used)

CNTXT, ENTXT, DWPI, VEN, CNKI, IEEE: 试穿, 试戴, 试鞋, 试衣, 虚拟现实, 增强现实, 预测, 识别, 关键点, 模型, 参数, 调整, 修正, 边缘点, 对应, 6D位姿, 六自由度位姿, 投影, Try+, fitting+, virtual w reality, VR, augmented w reality, AR, predict+, identify+, key?points, model?, parameter?, adjust+, revision, edge w points, correspond+, 6D w pose, six w degree w of w freedom w pose, project+

### C. DOCUMENTS CONSIDERED TO BE RELEVANT

| Category* | Citation of document, with indication, where appropriate, of the relevant passages | Relevant to claim No. |
|---|---|---|
| A | CN 112232183 A (BEIJING BYTEDANCE NETWORK TECHNOLOGY CO., LTD.) 15 January 2021 (2021-01-15) claim 1 | 1-16 |
| A | CN 114445601 A (BEIJING DATIANMIAN WHITE SUGAR TECHNOLOGY CO., LTD.) 06 May 2022 (2022-05-06) entire document | 1-16 |
| A | US 2022319120 A1 (STREEM, LLC) 06 October 2022 (2022-10-06) entire document | 1-16 |
| A | CN 111784845 A (TENCENT TECHNOLOGY (SHENZHEN) CO., LTD. et al.) 16 October 2020 (2020-10-16) entire document | 1-16 |
| A | CN 114693752 A (ALIBABA GROUP HOLDING LIMITED) 01 July 2022 (2022-07-01) entire document | 1-16 |

☑ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **24 April 2024** | **06 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 668 219 A1**

**INTERNATIONAL SEARCH REPORT**

International application No.

**PCT/CN2024/076736**

**C.    DOCUMENTS CONSIDERED TO BE RELEVANT**

| Category* | Citation of document, with indication, where appropriate, of the relevant passages | Relevant to claim No. |
|---|---|---|
| A | CN 113763440 A (TENCENT TECHNOLOGY (SHENZHEN) CO., LTD.) 07 December 2021 (2021-12-07)<br>entire document | 1-16 |
| A | CN 111369686 A (ZUGO TECHNOLOGY (HANGZHOU) CO., LTD.) 03 July 2020 (2020-07-03)<br>entire document | 1-16 |

Form PCT/ISA/210 (second sheet) (July 2022)

**INTERNATIONAL SEARCH REPORT**
Information on patent family members

| International application No. |
|---|
| **PCT/CN2024/076736** |

| Patent document cited in search report | | | Publication date (day/month/year) | Patent family member(s) | | | Publication date (day/month/year) |
|---|---|---|---|---|---|---|---|
| CN | 112232183 | A | 15 January 2021 | WO | 2022078014 | A1 | 21 April 2022 |
| CN | 114445601 | A | 06 May 2022 | None | | | |
| US | 2022319120 | A1 | 06 October 2022 | None | | | |
| CN | 111784845 | A | 16 October 2020 | None | | | |
| CN | 114693752 | A | 01 July 2022 | None | | | |
| CN | 113763440 | A | 07 December 2021 | None | | | |
| CN | 111369686 | A | 03 July 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310180644